# EUROPÄISCHE PATENTSCHRIFT

(11) **EP 3 356 590 B1**
(45) Veröffentlichungstag und Bekanntmachung des Hinweises auf die Patenterteilung: **21.08.2019**
(21) Anmeldenummer: 16760519.5
(22) Anmeldetag: 06.09.2016
(51) Int. Cl.: D04H 1/541, B29C 70/08, B29C 70/22, D04H 1/559, D04H 3/04, D04H 3/115, D04H 3/14

(54) **TEXTILES SUBSTRAT AUS VERSTÄRKUNGSFASERN**
TEXTILE SUBSTRATE MADE OF REINFORCING FIBRES
SUBSTRAT TEXTILE EN FIBRES DE RENFORT

(30) Priorität: 01.10.2015 EP 15187861
(43) Veröffentlichungstag der Anmeldung: 08.08.2018
(73) Patentinhaber: Teijin Carbon Europe GmbH, 42103 Wuppertal (DE)
(72) Erfinder: WOCKATZ, Ronny, 91315 Höchstadt (DE); ORTMANNS, Dirk, 41844 Wegberg (DE)
(74) Vertreter: CPW GmbH
(86) Internationale Anmeldenummer: PCT/EP2016/070959
(87) Internationale Veröffentlichungsnummer: WO 2017/055025

(56) Entgegenhaltungen:
- EP-A1- 1 060 069
- EP-A1- 1 125 728
- EP-A1- 1 348 791
- EP-A1- 1 669 486
- WO-A1-02/04725
- WO-A1-2007/015706
- US-A1- 2012 202 004

## Beschreibung

Die Erfindung betrifft ein textiles Substrat aus Verstärkungsfasern zur Herstellung von Verbundwerkstoff-Vorformlingen, das ein Gelege oder ein unidirektionales Gewebe aus mindestens einer ebenen flächigen Lage aus zueinander parallel nebeneinander angeordneten Multifilamentverstärkungsgarnen umfasst, die über Querfäden miteinander verbunden sind, wobei auf der mindestens einen flächigen Lage der Multifilamentverstärkungsgarne ein Vlies aus thermoplastischem Polymermaterial angeordnet ist, welches mit der flächigen Lage der Multifilamentverstärkungsgarne klebend verbunden ist.

Gelege aus Verstärkungsfasern oder -garnen, insbesondere auch in Form unidirektionaler Gewebe, sind seit langem auf dem Markt bekannt. Diese Gelege oder unidirektionalen Gewebe werden vielfach eingesetzt, um Verbundwerkstoff-Bauteile mit z.T. komplexen Strukturen herzustellen. Dabei werden zur Herstellung solcher Verbundwerkstoff-Bauteile in einem Zwischenschritt zunächst aus Gelegen oder unidirektionalen Geweben sogenannte Faservorformlinge ("Preforms") hergestellt, bei denen es sich um textile Halbzeuge in Form von zwei- oder dreidimensionalen Gebilden aus Verstärkungsfasern handelt, deren Form bereits nahezu der Form des endgültigen Bauteils entsprechen kann. Bei Ausführungsformen solcher Faservorformlinge, die im Wesentlichen nur aus den Verstärkungsfasern bestehen und bei denen der für die Bauteilherstellung erforderliche Matrixanteil noch zumindest weitgehend fehlt, wird in weiteren Schritten ein geeignetes Matrixmaterial über Infusion oder Injektion, auch unter Anwendung von Vakuum, in den Faservorformling eingebracht. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT).

Zur Herstellung der Faservorformlinge können die Gelege oder unidirektionalen Gewebe ohne Matrixmaterial in eine an die Bauteilkontur angepasste Form in mehreren Lagen übereinander gelegt werden, bis die gewünschte Dicke erreicht ist. In anderen Fällen können zunächst mehrere Lagen von Gelegen oder Geweben übereinander angeordnet und zu einem trockenen Multiaxialgelege z.B. mittels Nähfäden miteinander verbunden werden. Die Verstärkungsfasern der einzelnen Lagen können zueinander parallel oder auch wechselweise kreuzend ausgerichtet sein. Üblicherweise werden bei Multiaxialgelegen Winkel von 0°, 90°, plus oder minus 25°, plus oder minus 30°, plus oder minus 45° oder plus oder minus 60° eingestellt und der Aufbau so gewählt, dass sich gegenüber der NullGrad Richtung so ein symmetrischer Aufbau ergibt. Diese Multiaxialgelege lassen sich dann in einfacher Weise zu Preformen weiter verarbeiten.

Vielfach weisen Multiaxialgelege eine bei relativ niedrigen Temperaturen schmelzende thermoplastische Polymerkomponente z.B. in Gestalt der Nähfäden oder in Gestalt eines zusätzlich auf die Multifilamentverstärkungsgarne aufgebrachten Polymermaterials auf. Zur Ausbildung der Preform kann damit durch Aufschmelzen dieser Polymerkomponente und anschließendes Abkühlen der Preform Halt vermittelt werden, die Preform also stabilisiert werden.

Die Verwendung von Gelegen aus zueinander parallel nebeneinander angeordneten Multifilamentverstärkungsgarnen bzw. von unidirektionalen Geweben ermöglicht die Herstellung von Faserverbund-Bauteilen, bei denen eine gezielte Anpassung an die in der Anwendung auf das Bauteil wirkenden Beanspruchungen und somit hohe Festigkeiten in den jeweiligen Beanspruchungsrichtungen. Dabei können bei Verwendung von Multiaxialgelegen durch Anpassung hinsichtlich der Faserdichten und Faserwinkel an die im Bauteil vorliegenden Belastungsrichtungen geringe spezifische Gewichte realisiert werden.

Für die Herstellung der Preformen ist es wichtig, dass die dabei verwendeten Ausgangsmaterialien, wie die Gelege aus zueinander parallel nebeneinander angeordneten Multifilamentverstärkungsgarnen oder die unidirektionalen Gewebe oder aber auch die daraus hergestellten Multiaxialgelege, hinreichende Stabilitäten und Verformbarkeiten aufweisen, um so eine gute Handhabbarkeit und Drapierfähigkeit zu gewährleisten.

In der EP 1 352 118 A1 werden beispielsweise multiaxiale Gelege offenbart, bei denen die Lagen der Verstärkungsfasern mittels schmelzbarer Nähgarne zusammengehalten werden, die eine gute Verformbarkeit der multiaxialen Gelege oberhalb der Schmelztemperatur der Nähfäden und bei anschließender Abkühlung eine Stabilisierung der Form ermöglichen. Häufig werden Nähfäden aus thermoplastischen Polymeren wie z.B. Polyamid oder Polyester eingesetzt, wie beispielsweise in der EP 1 057 605 offenbart.

In der US 2005/0164578 wird ein Vorprodukt für einen Verbundwerkstoff-Vorformling (Preform) beschrieben, das mindestens eine Lage aus einem Verstärkungsfasergewebe aufweist und bei dem in mindestens einer der Lagen Fasern integriert sind, die die Preform stabilisieren, wenn diese erhöhten Temperaturen ausgesetzt werden, und die sich im späteren in dem zur Herstellung des Verbundbauteils eingesetzten Matrixharz lösen. Auch die WO 02/16481 offenbart Strukturen aus Verstärkungsfasern z.B. für Preformen, wobei die Strukturen flexible Polymerelemente enthalten, die z.B. in Gestalt von Fasern zwischen die Verstärkungsfasern eingebracht sind oder als Nähfäden die Verstärkungsfasern miteinander verbinden. Die flexiblen Polymerelemente bestehen aus einem Material, welches in dem eingesetzten härtbaren Matrixmaterial löslich ist.

Gemäß der DE 198 09 264 A1 können zwischen die miteinander vernähten Lagen aus Verstärkungsfasern der dort offenbarten Fasergelegeanordnungen für Faservorformlinge Klebevliese aus thermoplastischen Polymeren eingelegt werden. Durch diese Schmelzklebevliese lassen sich bei Erwärmung über die Schmelztemperatur des diese Vliese aufbauenden Polymers die Fasergelegeanordnungen auf einfache Weise in dreidimensionale Strukturen verformen, die nach Abkühlung praktisch ohne Rückstellkräfte ihre Form behalten.

Die EP 1 473 132 hat Multiaxialgelege bzw. ein Verfahren zur Herstellung dieser Multiaxialgelege sowie aus den Multiaxialgelegen hergestellte Preformen zum Gegenstand. Die dortigen Multiaxialgelege weisen zwischen den Lagen aus unidirektional verlegten Verstärkungsfasern Zwischenlagen aus thermoplastischen Fasern auf, wobei die Zwischenlagen Vliese aus Bikomponentenfasern oder Hybridvliese aus miteinander vermischten unterschiedlichen Fasern sein können. Das die Zwischenlagen aufbauende Polymer soll kompatibel mit dem später in die Preform injizierten Matrixharz sein. Insbesondere wird ausgeführt, dass die Zwischenlagen permeabel für das Matrixharz bei der Harzinfusion sein sollen und die Verstärkungslagen während der Harzinfusion und danach fixieren sollen. Im Falle der Verwendung von Epoxidharzen sind die Vliese aus Polyamidfasern aufgebaut. Die Vliese können mit den Lagen aus Verstärkungsfasern über Wirkmaschen verbunden sein oder über Schmelzklebung.

Die EP 1 705 269 offenbart ein thermoplastisches Fasermaterial aus einem Polyhydroxyether, welches z.B. bei multiaxialen Gelegen aus Verstärkungsfasern z.B. als Non-Woven zwischen die Lagen aus Verstärkungsfasern eingelegt werden kann. Unter Wärmeeinfluss wird das Polyhydroxyether-Material viskos und klebrig, so dass eine Fixierung der Verstärkungsfasern in einer definierten geometrischen Anordnung vor ihrer Einbettung in der Matrix erreicht werden kann.

Das Polyhydroxyether-Fasermaterial löst sich dann später bei einer Temperatur oberhalb seiner Glasumwandlungstemperatur vollständig im Matrixmaterial auf.

In der US 2006/0252334 werden Gelege aus mehreren Lagen von Verstärkungsfasern beschrieben, die zur Verbesserung der Schlagzähigkeit der aus diesen Gelegen hergestellten Bauteile zwischen den Verstärkungslagen z.B. Vliese aus polymeren Fasern enthalten. Dabei sollen diese polymeren Fasern im Matrixharz löslich sein, wodurch nach den Ausführungen der US 2006/0252334 eine im Vergleich zu schmelzbaren, unlöslichen Thermoplasten gleichmäßigere Verteilung des diese Fasern aufbauenden Polymers in die Harzmatrix ermöglicht wird.

Da die polymeren Fasern bei den Gelegen der US 2006/0252334 und der EP 1 705 269 im Matrixmaterial löslich sind und sich demzufolge während der Infiltration der Gelege mit Matrixharz auflösen, ist eine sichere Fixierung der Verstärkungslagen in diesem Stadium der Bauteilherstellung nicht hinreichend gewährleistet.

Es werden in der Patentliteratur auch Substrate in Gestalt von einlagigen Gelegen aus zueinander parallel nebeneinander angeordneten Multifilamentverstärkungsgarnen oder einlagigen unidirektionalen Geweben beschrieben, die für die Herstellung von Faservorformlingen geeignet sind. So beschreibt die EP 1 408 152 ein Substrat in Gestalt eines unidirektionalen Gewebes, bei denen zueinander unidirektional und parallel nebeneinander angeordnete Multifilamentverstärkungsgarne durch quer zu den Multifilamentverstärkungsgarnen verlaufende Hilfsfäden verwoben sind. Die Hilfsfäden können Kohlenstofffasern, Glasfasern, organische Fasern wie z.B. Aramid-, Polyamid-, PBO-, PVA oder Polyethylenfasern sein. Die Substrate der EP 1 408 152 können auch eine adhäsive Komponente aufweisen z.B. aus einem Nylon oder einem Polyester oder aus einem aushärtbaren Harz wie z.B. einem Epoxid-, einem Phenol- oder einem ungesättigten Polyesterharz. An den Multifilamentgarnen der Unidirektionalgewebe haften des Weiteren eine erste und eine zweite Harzkomponente. Die zweite Harzkomponente weist eine höhere Schmelztemperatur oder Fließbeginntemperatur auf als die erste Harzkomponente.

Die EP 2 233 625 offenbart Substrate in Gestalt von einlagigen Gelegen aus nebeneinander angeordneten Verstärkungsfasergarnen, die eine bogenförmige Kontur haben, wobei die Verstärkungsfasergarne durch Hilfsfäden, die als Schussfäden die Verstärkungsfasergarne kreuzen, zusammen gehalten werden. Als Hilfsfäden werden vorzugsweise Nylon- oder Glasfäden eingesetzt, wobei Glasfäden besonders bevorzugt eingesetzt werden, da sie nicht schrumpfen. Zur Stabilisierung der gebogenen Form kann ein Harzmaterial, dessen Hauptkomponente ein thermoplastisches Polymer ist, in Punktform, in linearer Form, in diskontinuierlicher Form oder in Form eines Vlieses auf das Substrat aufgebracht und mit diesem klebend verbunden sein.

Wenngleich die EP 2 233 625 bereits Substrate zur Verfügung stellt, die über einen Zusammenhalt verfügen und auch bei bogenförmigen Konturen ein gute Stabilität aufweisen, besteht dennoch Bedarf nach Substraten mit verbesserter Stabilität und gleichzeitig hoher Drapierfähigkeit, die einem automatisierten Herstellungsverfahren und einer automatisierten Verarbeitung zu Preformen zugänglich sind.

Der vorliegenden Erfindung liegt daher die Aufgabe zu Grunde, derartige Substrate zur Verfügung zu stellen. Es ist eine weitere Aufgabe, Substrate auf Basis von Verstärkungsfasern zur Verfügung zu stellen, die eine gute Formstabilität nach der Umformung zu Preformen sowie eine gute Durchlässigkeit bei der Infiltration von Matrixharzen aufweisen. Gleichzeitig sollen die aus diesen Gelegen hergestellten Bauteile hohe Festigkeitskennwerte insbesondere unter Druckbeaufschlagung und eine hohe Schlagzähigkeit besitzen.

Die Aufgabe wird gelöst durch ein textiles Substrat aus Verstärkungsfasern zur Herstellung von Verbundwerkstoff-Vorformlingen, umfassend ein unidirektionales Gelege aus mindestens einer ebenen flächigen Lage aus zueinander parallel nebeneinander angeordneten Multifilamentverstärkungsgarnen,
- wobei die nebeneinander angeordneten Multifilamentverstärkungsgarne über Querfäden miteinander verbunden sind und
- wobei auf der mindestens einen flächigen Lage der Multifilamentverstärkungsgarne ein Vlies aus thermoplastischem Polymermaterial angeordnet ist, welches mit der flächigen Lage der Multifilamentverstärkungsgarne klebend verbunden ist,
   - wobei das Substrat dadurch gekennzeichnet ist, dass die Querfäden eine Kern-Mantel-Struktur mit einer den Mantel aufbauende ersten Komponente und einer den Kern aufbauenden zweite Komponente aufweisen, wobei die erste Komponente eine niedrigere Schmelztemperatur aufweist als die zweite Komponente, die erste Komponente ein schmelzbares thermoplastisches Polymermaterial ist und über die erste Komponente der Querfäden die nebeneinander angeordneten Multifilamentverstärkungsgarne durch Schmelzklebung miteinander verbunden sind.

Im Rahmen der vorliegenden Erfindung wird dabei unter einem unidirektionalen Gelege eine Anordnung von mindestens einer ebenen flächigen Lage aus zueinander parallel nebeneinander angeordneten Multifilamentverstärkungsgarnen verstanden, bei der alle Verstärkungsgarne in eine Richtung orientiert sind. Bei den vorliegenden unidirektionalen Gelegen sind die Verstärkungsgarne durch die Querfäden über Schmelzklebung miteinander verbunden, wobei die Querfäden auf oder unterhalb der ebenen flächigen Lage aus zueinander parallel nebeneinander angeordneten Multifilamentverstärkungsgarnen verlaufen und auf oder unter die jeweilige Lage aufgelegt und mit den Verstärkungsgarnen der Lage verklebt sein können. Die zueinander parallel nebeneinander angeordneten Multifilamentverstärkungsgarne können auch über die Querfäden miteinander verwoben oder verwirkt und gleichzeitig mit den Querfäden über Schmelzklebung verbunden sein. Die unidirektionalen Gelege des vorliegenden textilen Substrats umfassen daher auch unidirektionale Gewebe bzw. Unidirektionalgewebe, bei denen ebenfalls alle Verstärkungsgarne in eine Richtung orientiert sind. Bei diesen Unidirektionalgeweben sind also die die jeweilige Lage aufbauenden, parallel zueinander angeordneten Verstärkungsgarne durch Ketten aus lockeren Bindefäden, die sich im Wesentlichen quer zu den Verstärkungsgarnen erstrecken, miteinander verbunden. Derartige Unidirektionalgewebe werden beispielsweise in der EP 0 193 479 B1, der EP 0 672 776 oder der EP 2 233 625 beschrieben. Bevorzugt weist das unidirektionale Gelege eine einzelne flächige Lage aus zueinander parallel nebeneinander angeordneten Multifilamentverstärkungsgarnen auf.

Die vorliegenden textilen Substrate besitzen eine hohe Stabilität gegenüber einem Verschieben der Verstärkungsgarne gegeneinander sowohl in Erstreckungsrichtung der Verstärkungsgarne als auch quer dazu. Dies ist zum einen darauf zurückzuführen, dass das Vlies aus thermoplastischem Polymermaterial klebend mit der Lage der Multifilamentverstärkungsgarne verbunden ist. Zum anderen bewirken die Querfäden mit Kern-Mantel-Struktur eine weitere Stabilisierung, da die den Mantel aufbauende erste Komponente aus einem schmelzbaren thermoplastischen Polymermaterial mit niedrigerem Schmelzpunkt gegenüber der den Kern aufbauenden zweiten Komponente bewirkt, dass die nebeneinander angeordneten Multifilamentverstärkungsgarne durch Schmelzklebung miteinander verbunden sind.

Gleichzeitig verleiht die höher schmelzende Kernkomponente dem Substrat auch bei höheren Temperaturen, wie sie beispielsweise während der Härtung von Matrixharzen bei der Fertigung von Verbundwerkstoffbauteilen aus dem vorliegenden textilen Substrat vorliegen, eine ausreichende Querstabilität sowohl im Hinblick auf ein eventuelles Schrumpfen als auch im Hinblick auf eine eventuelle Längung.

Das vorliegende textile Substrat lässt sich bestens zur Herstellung von Faservorformlingen einsetzen, indem mehrere Lagen des textilen Substrats entsprechend den Festigkeitserfordernissen des letztlich herzustellenden Verbundwerkstoff-Bauteils aufeinander gelegt und z.B. in eine Form eingebracht werden. Auf Grund der guten Drapierfähigkeit des vorliegenden textilen Substrats können dabei auch Faservorformlinge mit gebogenen Konturen hergestellt werden. Die aufeinander gelegten Lagen des textilen Substrats können dann beispielsweise durch kurzzeitige Temperaturerhöhung und anschließende Abkühlung über das Vlies oder auch über die Mantelkomponente der Querfäden miteinander verbunden, d.h. fixiert werden, so dass ein stabiler und handhabbarer Faservorformling erhalten wird.

Wie ausgeführt weist die erste, den Mantel der Querfäden aufbauende Komponente eine niedrigere Schmelztemperatur auf als die den Kern aufbauende zweite Komponente. Vorzugsweise liegt die Schmelztemperatur der ersten Komponente der Querfäden im Bereich von 70 bis 150°C und besonders bevorzugt im Bereich von 80 bis 120°C. Die erste Komponente kann ein Polymer oder eine Polymermischung sein, deren Schmelztemperatur in diesem Bereich liegt. Besonders bevorzugt ist die erste Komponente ein Polyamidhomopolymer oder Polyamidcopolymer oder eine Mischung aus Polyamidhomopolymeren und/oder Polyamidcopolymeren. Von diesen Polymeren sind Polyamid 6, Polyamid 6.6, Polyamid 6.12, Polyamid 4.6, Polyamid 11, Polyamid 12 oder ein Polymer auf Basis Polyamid 6/12 bestens geeignet.

Ebenso ist bevorzugt, wenn die zweite Komponente der Querfäden eine Schmelztemperatur oberhalb von 200°C aufweist. Besonders bevorzugt ist die zweite Komponente eine Glas oder ein Polyester, da diese Materialien bei den bei der Verbundwerkstoff-Bauteilfertigung herrschenden Temperaturen einen geringen Schrumpf und eine geringe Dehnung aufweisen.

Im vorliegenden textilen Substrat können als Multifilamentverstärkungsgarne die üblichen zur Herstellung von faserverstärkten Verbundwerkstoffen verwendeten Verstärkungsfasern bzw. -garne eingesetzt werden. Vorzugsweise handelt es sich bei den Multifilamentverstärkungsgarnen um Kohlenstofffaser-, Glasfaser -, oder Aramidgarne oder um hochverstreckte UHMW-Polyethylengarne und besonders bevorzugt um Kohlenstofffasergarne. In einer vorteilhaften Ausführungsform liegen die Multifilamentverstärkungsgarne im textilen Substrat in einem Flächengewicht von 50 bis 500 g/m² vor. Besonders vorteilhaft ist ein Flächengewicht im Bereich von 100 bis 300 g/m². Vorzugsweise bestehen die Multifilamentverstärkungsgarne aus 500 bis 50000 Verstärkungsfaserfilamenten. Zur Erzielung einer besonders guten Drapierfähigkeit und eines besonders gleichmäßigen Erscheinungsbildes des textilen Substrats bestehen die Multifilamentverstärkungsgarne besonders bevorzugt aus 6000 bis 24000 Verstärkungsfaserfilamenten.

Die Feinheit der Querfäden richtet sich vorzugsweise nach der Anzahl der Verstärkungsfaserfilamente der Multifilamentverstärkungsgarne und damit nach dem Titer der Multifilamentverstärkungsgarne. Bei zu großen Titern der Querfäden kommt es bei Unidirektionalgeweben, aber auch allgemein bei mehrlagigen Aufbauten aus den textilen Substraten zu einer erhöhten Welligkeit der Verstärkungsgarne. Daher sollte der Titer der Querfäden vorzugsweise nicht mehr als 1/5 des Titers der Multifilamentverstärkungsgarne betragen. Bevorzugt weisen die Querfäden einen Titer im Bereich von 20 bis 400 dtex auf und besonders bevorzugt im Bereich von 50 bis 200 dtex.

Ebenso ist zur Erzielung einer möglichst geringen Welligkeit, gleichzeitig jedoch einer ausreichenden Stabilität des textilen Substrats bevorzugt, wenn die Anzahl der Querfäden in Erstreckungsrichtung der Multifilamentverstärkungsgarne im Bereich von 0,3 bis 6 Fäden/cm liegt. Besonders bevorzugt liegt die Anzahl im Bereich von 0,6 bis 2 Fäden/cm. Die Querfäden können unter einem rechten Winkel zu den Multifilamentverstärkungsgarnen verlaufen. Jedoch sind auch beliebige andere Winkel zwischen den Querfäden und den Multifilamentverstärkungsgarnen möglich.

Bei dem Vlies des textilen Substrats kann es sich um ein textiles Flächengebilde aus ungerichteten Kurzschnitt- oder Stapelfasern handeln oder um ein Wirrlagen-Vlies aus Endlosfilamenten, das verfestigt werden muss, z.B. unter Temperaturbeaufschlagung und unter Druck, wodurch die Filamente an den Kontaktpunkten verschmelzen und so das Vlies ausbilden. Wie ausgeführt, wird durch das Vlies zum einen eine Verbindung der Multifilamentverstärkungsgarne erreicht. Gleichzeitig wird eine gute Drapierbarkeit und/oder einer besseren Infiltrierbarkeit der aus dem textilen Substrat hergestellten Faservorformlinge mit Matrixharz bewirkt. Bei dem Vlies kann es sich beispielsweise auch um ein Glasvlies oder ein Vlies aus Kohlenstofffasern handeln, das dann mittels eines Adhäsionsklebers mit der flächigen Lage der Multifilamentverstärkungsgarne klebend verbunden ist.

Vorzugsweise besteht das Vlies aus einem thermoplastischen Polymermaterial. Derartige Vliese werden beispielsweise in der DE 35 35 272 C2, der EP 0 323 571 A1, der US 2007/0202762 A1 oder der US 2008/0289743 A1 offenbart. Bei geeigneter Auswahl des thermoplastischen Polymermaterials kann das Vlies als Agens zur Erhöhung der Schlagzähigkeit wirken und weitere, die Schlagzähigkeit erhöhende Mittel brauchen dann bei der Herstellung der Verbundwerkstoff-Bauteile dem Matrixmaterial selbst nicht mehr zugefügt zu werden. Das Vlies sollte dabei während der Infiltration der aus dem textilen Substrat hergestellten Faservorformlinge mit Matrixmaterial noch hinreichende Stabilität aufweisen, bei anschließenden Press- und/oder Härtungstemperaturen vorzugsweise jedoch schmelzen. Bevorzugt besitzt daher das das Vlies aufbauende thermoplastische Polymermaterial eine Schmelztemperatur, die im Bereich von 80 bis 250°C liegt. Bei Anwendungen, bei denen Epoxidharze als Matrixmaterialien eingesetzt werden, haben sich beispielsweise Vliese aus Polyamid bewährt.

In einer bevorzugten Ausführungsform umfasst das Vlies eine erste und eine zweite Polymerkomponente, deren Schmelztemperatur unterhalb der Schmelz- oder Zersetzungstemperatur der zweiten Komponente der Querfäden liegen, wobei die zweite Polymerkomponente eine niedrigere Schmelztemperatur aufweist als die erste Polymerkomponente. Dabei ist als erste Polymerkomponente eine solche besonders bevorzugt, die in Epoxid-, Cyanatester-, oder Benzoxazin-Matrixharzen oder in Mischungen dieser Matrixharze nicht löslich ist. Von besonderem Vorteil ist es, wenn die Schmelztemperatur der ersten Polymerkomponente mindestens so hoch wie die Härtungstemperatur der Matrixharze ist.

Als erste Polymerkomponente des bevorzugt eingesetzten Vlieses können übliche zu thermoplastischen Fäden verarbeitbare Polymere eingesetzt werden, solange sie die zuvor genannten Bedingungen erfüllen, wie z.B. Polyamide, Polyimide, Polyamidimide, Polyester, Polybutadiene, Polyurethane, Polypropylene, Polyetherimide, Polysulfone, Polyethersulfone, Polyphenylensulfone, Polyphenylensulfide, Polyetherketone, Polyetheretherketone, Polyarylamide, Polyketone, Polyphtalamide, Polyphenylenether, Polybutylenterephthalate oder Polyethylenterephthalate oder Copolymere oder Mischungen dieser Polymere. Besonders bevorzugt ist die erste Polymerkomponente des Vlieses ein Polyamidhomopolymer oder Polyamidcopolymer oder eine Mischung aus Polyamidhomopolymeren und/oder Polyamidcopolymeren. Insbesondere ist das Polyamid-Homopolymer oder -Copolymer ein Polyamid 6, Polyamid 6.6, Polyamid 6.12, Polyamid 4.6, Polyamid 11, Polyamid 12 oder ein Copolymer auf Basis Polyamid 6/12. Bevorzugt weist die erste Polymerkomponente des Vlieses eine Schmelztemperatur im Bereich von 180 bis 250°C auf.

In einer vorteilhaften Ausführungsform weist die zweite Polymerkomponente des Vlieses eine Schmelztemperatur im Bereich von 80 bis 140°C auf. Für die zweite Polymerkomponente des Vlieses können übliche Polymere eingesetzt werden, deren Schmelztemperatur in diesem Bereich liegt, wie z.B. niedrigschmelzende Polyamid-Homopolymere oder -Copolymere sowie Mischungen dieser Polymere, Polyolefine, insbesondere Polyethylene (z.B. PE-LLD, PE-HD), Copolyester, Ethylenvinylacetate, Terpolymere, wie z.B. Acrylnitril-Butadien-StyrolCopolymerisate (ABS), oder Polyhydroxyether.

Dabei kann in einer bevorzugen Ausführungsform die zweite Polymerkomponente in Epoxid-, Cyanatester-, oder Benzoxazin-Matrixharzen oder in Mischungen dieser Matrixharze löslich sein. Des Weiteren ist in diesem Fall von besonderem Vorteil, wenn die zweite Polymerkomponente ein mit Epoxid-, Cyanatester-, oder Benzoxazin-Matrixharzen bei der Vernetzung dieser Matrixharze chemisch reagierendes Polymer ist. Besonders bevorzugt handelt es sich bei der zweiten Polymerkomponente dann um ein Polyhydroxyether, welcher sich insbesondere in Epoxidharzen, Cyanatesterharzen oder Benzoxazinharzen bereits während der Infiltrierung eines aus dem vorliegenden textilen Substrat hergestellten Faservorformlings mit diesen Matrixharzen, d.h. z.B. während des Harz-Infusionsprozesses, vollständig im Harzsystem löst und dann zusammen mit dem Matrixharz das Matrixharzsystem ausbildet. Die erste Polymerkomponente löst sich hingegen, wie ausgeführt, nicht im Matrixsystem und bleibt sowohl während als auch nach dem Harz-Infusionsprozess und auch nach der Aushärtung des Matrixsystems als eigene Phase bestehen.

Gemäß einer ebenfalls bevorzugen Ausführungsform ist die zweite Polymerkomponente in Epoxid-, Cyanatester-, oder Benzoxazin-Matrixharzen oder in Mischungen dieser Matrixharze nicht löslich. In diesem Fall kann es sich bei der zweiten Polymerkomponente des Vlieses z.B. um ein niedrigschmelzendes Polyamid- Homopolymer oder -Copolymer oder um Mischungen davon handeln oder um ein Polyolefin, insbesondere ein Polyethylen (z.B. PE-LLD, PE-HD), ein Copolyester, ein Ethylenvinylacetat oder ein Terpolymer, wie z.B. AcrylnitrilButadien-Styrol-Copolymerisate (ABS).

Bei Vliesen mit einer ersten und einer zweiten Polymerkomponente ist von besonderem Vorteil, wenn die Schmelztemperatur der ersten Polymerkomponente des Vlieses im Bereich von 180 bis 250°C und die Schmelztemperatur der zweiten Polymerkomponente des Vlieses im Bereich von 80 bis 140°C liegt.

Die erste Polymerkomponente schmilzt besonders bevorzugt oberhalb der Härtungstemperatur des eingesetzten Matrixharzes. Auf diese Weise wird die erste Polymerkomponente zwar in das Matrixmaterial eingebunden, bildet jedoch im ausgehärteten Matrixharz stets eine eigene Phase aus. Diese durch die erste Polymerkomponente ausgebildete separate Phase hilft bei der Aushärtung und im späteren Bauteil, eine Ausbreitung von Rissen zu begrenzen und trägt so z.B. zur Erhöhung der Schlagzähigkeit entscheidend bei.

Wenn das Vlies eine erste höherschmelzende und eine zweite niedrigerschmelzende Polymerkomponente aufweist, kann während der Herstellung eines Faservorformlings bei Erwärmung auf eine Temperatur oberhalb der Schmelztemperatur der zweiten Polymerkomponente, jedoch unterhalb der Schmelztemperatur der ersten Polymerkomponente, eine Beweglichkeit der Substratlagen gegeneinander erreicht werden. Die geschmolzene zweite Komponente des Vlieses wirkt gewissermaßen als Gleitmittel, so dass die Lagen der Verstärkungsgarne beim Umformprozess in die Preform in die gewünschte Lage gleiten können. Bei Abkühlung der Preform wirkt dann die zweite Polymerkomponente als Schmelzkleber und fixiert die Verstärkungslagen in ihrer Position.

Bei der nachfolgenden Infiltrierung des Faservorformlings mit Matrixharz, die in der Regel bei Temperaturen oberhalb der Schmelztemperatur der zweiten, jedoch unterhalb der Schmelztemperatur der ersten Komponente erfolgt, ist durch die höherschmelzende erste Polymerkomponente des Vlieses eine gute Durchlässigkeit für das Matrixharz gewährleistet. Ist die zweite Polymerkomponente entsprechend der einen zuvor genannten bevorzugten Ausführungsformen im Matrixharz löslich, löst sich diese Komponente dann vorzugsweise vollständig im Matrixharz auf und verliert auf diese Weise ihre Identität als eigenständige Phase gegenüber dem Matrixharz. Daher ist dann der Anteil der zweiten Polymerkomponente somit dem Matrixmaterial zuzurechnen und der zu infiltrierende Anteil an Matrixharz kann um den Anteil der zweiten Polymerkomponente reduziert werden. Infolgedessen können hohe Faservolumenanteile der Verstärkungsfasern im resultierenden Bauteil eingestellt und damit das Niveau der mechanischen Festigkeitskennwerte auf hohem Niveau gehalten werden. Bei der Aushärtetemperatur des Matrixharzes, d.h. des Epoxid-, Cyanatester-, oder Benzoxazinharzes, reagiert in einer besonders bevorzugten Ausführungsform die zweite Polymerkomponente chemisch mit dem aushärtenden Matrixharz über Vernetzungsreaktionen und wird so integraler Teil einer homogenen Matrix.

Im Fall, dass die zweite Polymerkomponente in Epoxid-, Cyanatester-, oder Benzoxazin-Matrixharzen oder in Mischungen dieser Matrixharze nicht löslich ist, wirkt die erste Polymerkomponente ebenso, wie zuvor erläutert, als ein Beweglichkeit der Substratlagen gegeneinander vermittelndes Gleitmittel, so dass die Lagen der Verstärkungsgarne beim Umformprozess zur Preform in die gewünschte Lage gleiten können, und bei Abkühlung der Preform dann als Schmelzkleber, der die Verstärkungslagen in ihrer Position fixiert. Bei der Infiltrierung des Matrixharzes und dessen anschließender Härtung bleibt ihre Identität als eigenständige Phase gegenüber dem Matrixharz jedoch dann erhalten, so dass in diesem Fall die zweite Polymerkomponente - wie auch die erste Polymerkomponente - die Ausbreitung von Rissen verringert und so z.B. zur Verbesserung der Schlagzähigkeit beiträgt.

Im bevorzugten Fall, dass das Vlies eine erste Polymerkomponente mit höherer Schmelztemperatur und eine zweite Polymerkomponente mit niedrigerer Schmelztemperatur aufweist, kann es aus einer Mischung von Monokomponentenfasern aus den jeweiligen Polymerkomponenten bestehen, also ein Hybridvlies sein. Das Vlies kann jedoch auch aus Bikomponentenfasern bestehen, beispielsweise aus Kern-Mantel Fasern, wobei der Kern der Fasern aus der höher schmelzenden ersten Polymerkomponente und der Mantel aus der niedriger schmelzenden zweiten Polymerkomponente aufgebaut ist. Bei der Verarbeitung der textilen Substrate mit solchen Hybridvliesen oder Bikomponentenvliesen zu Faservorformlingen, also zu Preformen, die beispielsweise auch eine Verformung der textilen Substrate erfordert, kann bei einer geeigneten Wärmebeaufschlagung während der Verformung bei Temperaturen oberhalb des Schmelzpunktes der niedriger schmelzenden Vlieskomponente aber unterhalb des Schmelzpunktes der höher schmelzenden Vlieskomponente eine gute Verformbarkeit und nach Abkühlung eine gute Stabilisierung und Fixierung des verformten Geleges erzielt werden. Ähnlich einem Vlies aus Bikomponentenfasern kann das Vlies auch z.B. aus einer Wirrlage von Fasern aus der ersten Polymerkomponente aufgebaut sein, wobei die zweite Polymerkomponente z.B. durch Besprühen oder durch Beschichten auf die Fasern der ersten Polymerkomponente aufgetragen wurde. Die Beschichtung kann beispielsweise über eine Imprägnierung mit einer Dispersion oder Lösung der zweiten Polymerkomponente erfolgen, wobei nach der Imprägnierung der Flüssigkeitsanteil der Dispersion bzw. das Lösemittel entfernt wurde. Ebenso ist es möglich, dass ein aus Fasern der ersten Polymerkomponente aufgebautes Vlies die zweite Polymerkomponente in Gestalt feiner, zwischen die Fasern der ersten Polymerkomponente eingelagerter Partikel enthält.

Vorzugsweise handelt es sich bei dem eine erste und eine zweite Polymerkomponente umfassenden Vlies um ein Hybridvlies, d.h. um ein Vlies aus einer Mischung von Monokomponentenfasern mit unterschiedlichen Schmelztemperaturen. Wie ausgeführt hat dabei besonders bevorzugt die erste Polymerkomponente mit höherer Schmelztemperatur eine Schmelztemperatur im Bereich von 180 bis 250°C. Bei solchen Temperaturen schmilzt der Teil des Vlieses, der aus der ersten Polymerkomponente besteht, erst oberhalb der Temperaturen, die in der Regel bei der Injektion des Matrixharzes vorherrschen.

Da somit die erste Polymerkomponente bei der Harzinjektionstemperatur noch nicht schmilzt, ist eine gute Formkonstanz des textilen Substrats in diesem Stadium gewährleistet.

Im Hinblick auf die Eigenschaften der mit den vorliegenden textilen Substraten hergestellten Verbundbauteile, insbesondere im Hinblick auf deren Schlagzähigkeit und auf deren Matrixgehalte ist es von Vorteil, wenn das Vlies die erste Polymerkomponente in einem Anteil von 60 bis 80 Gew.-% und die zweite Polymerkomponente in einem Anteil von 20 bis 40 Gew.-% enthält. Insgesamt ist es bevorzugt, wenn das im textilen Substrat vorliegende Vlies ein Flächengewicht im Bereich von 5 bis 25 g/m² und besonders bevorzugt ein Flächengewicht im Bereich von 5 bis 15 g/m² aufweist.

Insbesondere in Fällen, bei denen das Vlies des textilen Substrats nur eine bei höheren Temperaturen schmelzende Polymerkomponente aufweist, d.h. also beispielsweise nur eine Polymerkomponente, deren Schmelztemperatur im Bereich von 180 bis 250°C liegt, umfasst das textile Substrat in einer bevorzugten Ausführungsform des Weiteren an mindestens einer der Oberflächen der flächigen Lage der Multifilamentverstärkungsgarne ein Bindermaterial, dessen Hauptkomponente ein thermoplastisches Polymer oder ein bei Raumtemperatur festes Epoxidharz auf Basis Bisphenol A ist und das diskontinuierlich auf der flächigen Lage der Multifilamentverstärkungsgarne aufgetragen und haftend mit den Multifilamentverstärkungsgarnen verbunden ist. Unter einer diskontinuierlichen Auftragung wird verstanden, dass das Bindermaterial punktförmig, in Form von Linien oder in sonstige Weise auf der Oberfläche aufgetragen ist, ohne dass eine geschlossene Schicht des Bindermaterials vorliegt. Vorzugsweise liegt das Bindermaterial in einer Konzentration von 1 bis 5 Gew.-% des Flächengewichts der Multifilamentverstärkungsgarne vor.

In einer besonders bevorzugten Ausführungsform des textilen Substrats basiert das Bindermaterial auf einem pulverförmigen Material und ist punktförmig auf der flächigen Lage der Multifilamentverstärkungsgarne aufgetragen. Dies kann dadurch erreicht werden, dass das pulverförmige Bindermaterial auf die Oberfläche der Lage aus zueinander parallel nebeneinander angeordneten Multifilamentverstärkungsgarnen aufgestreut und durch Anschmelzen auf der Oberfläche fixiert wird.

Als thermoplastische Polymere für das Bindermaterial können bevorzugt Polyvinylacetat, Polycarbonat, Polyacetal, Polyphenylenoxid, Polyphenylensulfid, Polyallylat, Polyester, Polyamid, Polyamidimid, Polyimid, Polyetherimid, Polysulfon, Polyethersulfon, Polyetheretherketon, Polyaramid, Polybenzoimidazol, Polyethylen, Polypropylen oder Celluloseacetat verwendet werden.

Vorzugsweise liegt die Schmelztemperatur des Bindermaterials im Bereich von 80 bis 120°C. Das Bindermaterial kann dabei allein die Aufgabe haben, bei der Herstellung von Faservorformlingen aufeinandergelegte Lagen des textilen Substrats durch Aufheizen auf eine Temperatur oberhalb der Schmelztemperatur des Bindermaterials und anschließendes Abkühlen miteinander zu verbinden und gegeneinander zu fixieren. Darüber hinaus kann das Bindermaterial zur Stabilisierung des Faservorformlings beitragen, wenn z.B. eine Verformung der Lagen des textilen Substrats bei der Ausbildung des Faservorformlings erfolgt ist. Schließlich ist es jedoch auch möglich, dass das Bindermaterial so ausgewählt wird, dass es zu einer Verbesserung der mechanischen Eigenschaften des aus dem Faservorformling hergestellten Verbundwerkstoff-Bauteils beiträgt, indem es z.B. die Schlagzähigkeit des Bauteils verbessert. Hierzu ist von Vorteil, wenn das Bindermaterial ein thermoplastisches Material mit einer hohen Zähigkeit oder eine Mischung eines solchen thermoplastischen Polymers mit einem bei Raumtemperatur festen Epoxidharz auf Basis Bisphenol A ist.

Aufgrund seines spezifischen Aufbaus zeichnet sich das erfindungsgemäße Substrat durch eine gute Drapierbarkeit und Fixierbarkeit der Substratlagen im Faservorformling bzw. in der Preform aus, durch eine gute Durchlässigkeit bei der Infiltrierung mit Matrixharz zur Bauteilfertigung aus der Preform sowie dadurch, dass mit ihnen Bauteile mit hohen mechanischen Festigkeiten und mit hoher Schlagzähigkeit herstellbar sind. Daher betrifft die vorliegende Erfindung insbesondere auch einen Faservorformling bzw. eine Preform zur Herstellung eines Verbundwerkstoff-Bauteils, welche ein erfindungsgemäßes textiles Substrat umfasst.

Durch die Verbindung der Multifilamentverstärkungsgarne mit den Querfäden und gleichzeitig mit dem Vlies sowie gegebenenfalls mit dem Bindermaterial in Form einer Klebeverbindung erhält das textile Substrat ein hohes Maß an Formstabilität, da durch die Klebeverbindungen eine exzellente Fixierung der Multifilamentverstärkungsgarne im Verhältnis zueinander erhalten wird. Damit sind nicht nur textile Substrate realisierbar, bei denen die Multifilamentverstärkungsgarne in gerader Form nebeneinander und parallel zueinander vorliegen, sondern auch textile Substrate mit einer gebogenen Form. Eine bevorzugte Ausführungsform betrifft daher ein textiles Substrat, bei dem die mindestens eine ebene Lage aus zueinander parallel nebeneinander angeordneten Multifilamentverstärkungsgarnen eine gebogene Kontur aufweist, bei der die Multifilamentverstärkungsgarne parallel zu einer Umfangsrichtung der gebogenen Kontur angeordnet sind und jedes Multifilamentverstärkungsgarn auf seiner eigenen, der Umfangsrichtung der gebogenen Kontur zugeordneten Bahnkurve verläuft und die Bahnkurven der einzelnen Multifilamentverstärkungsgarne einen gemeinsamen Krümmungsmittelpunkt aufweisen.

In einem solchen textilen Substrat mit einer gebogenen Form oder Kontur sind die Multifilamentverstärkungsgarne parallel zu einer Richtung (0° Richtung) entlang einer Umfangsrichtung der gebogenen Kontur. Im Unterschied zu Gelegen, bei denen die Multifilamentverstärkungsgarne zueinander parallel nebeneinander angeordnet sind und einen geraden, linearen Verlauf haben, sind die Multifilamentverstärkungsgarne bei den textilen Substraten mit einer gebogenen Form ebenfalls zueinander parallel nebeneinander angeordnet, verlaufen aber auf unterschiedlichen gebogenen Bahnkurven mit gemeinsamem Krümmungsmittelpunkt. Die Querfäden erstrecken sich auch hierbei in einer die Multifilamentverstärkungsgarne kreuzenden Richtung quer zu den Multifilamentverstärkungsgarnen. Diese gebogene Form bleibt auf Grund der hohen Formstabilität und in Folge der Ausgestaltung der vorliegenden textilen Substrate, insbesondere durch die Querfäden einer Kern-Mantel-Struktur aus zwei Komponenten, auch bei nachfolgenden Verarbeitungsschritten zum Faservorformling bzw. zum Verbundwerkstoff-Bauteil erhalten. Hierbei wird eine weitere Stabilisierung bei textilen Substraten erhalten, bei denen das Vlies aus thermoplastischem Polymermaterial eine erste Polymerkomponente und eine zweite Polymerkomponente umfasst, welche die zuvor beschriebenen Eigenschaften aufweisen.

## Patentansprüche

1. Textiles Substrat aus Verstärkungsfasern zur Herstellung von Verbundwerkstoff-Vorformlingen, umfassend ein unidirektionales Gelege aus mindestens einer flächigen Lage aus zueinander parallel nebeneinander angeordneten Multifilamentverstärkungsgarnen,
- wobei die nebeneinander angeordneten Multifilamentverstärkungsgarne über Querfäden miteinander verbunden sind und
- wobei auf der mindestens einen flächigen Lage der Multifilamentverstärkungsgarne ein Vlies aus thermoplastischem Polymermaterial angeordnet ist, welches mit der flächigen Lage der Multifilamentverstärkungsgarne klebend verbunden ist,
**dadurch gekennzeichnet, dass**
- die Querfäden eine Kern-Mantel-Struktur mit einer den Mantel aufbauende ersten Komponente und einer den Kern aufbauenden zweite Komponente aufweisen, wobei die erste Komponente eine niedrigere Schmelztemperatur aufweist als die zweite Komponente, die erste Komponente ein schmelzbares thermoplastisches Polymermaterial ist und über die erste Komponente der Querfäden die nebeneinander angeordneten Multifilamentverstärkungsgarne durch Schmelzklebung miteinander verbunden sind.

2. Textiles Substrat nach Anspruch 1, **dadurch gekennzeichnet, dass** die erste Komponente der Querfäden eine Schmelztemperatur im Bereich von 70 bis 150°C aufweist.

3. Textiles Substrat nach Anspruch 2, **dadurch gekennzeichnet, dass** die erste Komponente der Querfäden ein Polyamidhomopolymer oder Polyamidcopolymer oder eine Mischung aus Polyamidhomopolymeren und/oder Polyamidcopolymeren ist.

4. Textiles Substrat nach einem oder mehreren der Ansprüche 1 bis 3, **dadurch gekennzeichnet, dass** die zweite Komponente der Querfäden eine Schmelztemperatur oberhalb von 200°C aufweist.

5. Textiles Substrat nach Anspruch 4, **dadurch gekennzeichnet, dass** die zweite Komponente der Querfäden ein Glas oder ein Polyester ist.

6. Textiles Substrat nach einem oder mehreren der Ansprüche 1 bis 5, **dadurch gekennzeichnet, dass** die Querfäden einen Titer im Bereich von 20 bis 400 dtex aufweisen.

7. Textiles Substrat nach einem oder mehreren der Ansprüche 1 bis 7, **dadurch gekennzeichnet, dass** das Vlies ein Flächengewicht im Bereich von 5 bis 25 g/m² aufweist.

8. Textiles Substrat nach einem oder mehreren der Ansprüche 1 bis 7, **dadurch gekennzeichnet, dass** das Vlies eine erste Polymerkomponente umfasst, deren Schmelztemperatur unterhalb der Schmelz- oder Zersetzungstemperatur der zweiten Komponente der Querfäden liegt und die in Epoxid-, Cyanatester-, oder Benzoxazin-Matrixharzen oder in Mischungen dieser Matrixharze nicht löslich ist, sowie eine zweite Polymerkomponente, die eine niedrigere Schmelztemperatur aufweist als die erste Polymerkomponente.

9. Textiles Substrat nach Anspruch 8, **dadurch gekennzeichnet, dass** die erste Polymerkomponente des Vlieses eine Schmelztemperatur im Bereich von 180 bis 250°C und die zweite Polymerkomponente des Vlieses eine Schmelztemperatur im Bereich von 80 bis 140°C aufweist.

10. Textiles Substrat nach Anspruch 8 oder 9, **dadurch gekennzeichnet, dass** die erste Polymerkomponente des Vlieses ein Polyamidhomopolymer oder Polyamidcopolymer oder eine Mischung aus Polyamidhomopolymeren und/oder Polyamidcopolymeren ist.

11. Textiles Substrat nach einem oder mehreren der Ansprüche 1 bis 10, **dadurch gekennzeichnet, dass** es des Weiteren an mindestens einer der Oberflächen der flächigen Lage der Multifilamentverstärkungsgarne ein Bindermaterial umfasst, dessen Hauptkomponente ein thermoplastisches Polymer oder ein bei Raumtemperatur festes Epoxidharz auf Basis Bisphenol A ist und das diskontinuierlich auf der flächigen Lage der Multifilamentverstärkungsgarne aufgetragen und haftend mit den Multifilamentverstärkungsgarnen verbunden ist.

12. Textiles Substrat nach Anspruch 11, **dadurch gekennzeichnet, dass** das Bindermaterial eine Schmelztemperatur im Bereich von 80 bis 120°C aufweist.

13. Textiles Substrat nach einem oder mehreren der Ansprüche 1 bis 12, **dadurch gekennzeichnet, dass** die Multifilamentverstärkungsgarne Kohlenstofffaser-, Glasfaser- oder Aramidgarne oder hochverstreckte UHMW-Polyethylengarne sind.

14. Textiles Substrat nach einem oder mehreren der Ansprüche 1 bis 13, **dadurch gekennzeichnet, dass** die mindestens eine ebene Lage aus zueinander parallel nebeneinander angeordneten Multifilamentverstärkungsgarnen eine gebogene Kontur aufweist, bei der die Multifilamentverstärkungsgarne parallel zu einer Umfangsrichtung der gebogenen Kontur angeordnet sind und jedes Multifilamentverstärkungsgarn auf seiner eigenen, der Umfangsrichtung der gebogenen Kontur zugeordneten Bahnkurve verläuft und die Bahnkurven der einzelnen Multifilamentverstärkungsgarne einen gemeinsamen Krümmungsmittelpunkt aufweisen.

15. Faservorformling zur Herstellung von Verbundwerkstoffbauteilen, **dadurch gekennzeichnet, dass** sie ein textiles Substrat nach einem oder mehreren der Ansprüche 1 bis 14 umfasst.

## Claims

1. Textile substrate made of reinforcement fibres for the production of composite-material preforms, comprising a unidirectional laid fabric of at least one flat layer of multifilament reinforcing yarns arranged parallel side by side to one another.
- wherein the multifilament reinforcing yarns arranged parallel side by side to one another are joined together by transverse threads and
- wherein a nonwoven of thermoplastic polymer material is arranged on the at least one flat layer of the multifilament reinforcing yarns and is adhesively bonded to the flat layer of multifilament reinforcing yarns **characterised in that**
- the transverse threads have a core/sheath structure having a first component forming the sheath and a second component forming the core, wherein the first component has a lower melting temperature than the second component, the first component is a fusible thermoplastic polymer material and the multifilament reinforcing yarns are arranged parallel side by side are joined together via the first component of the transverse threads by meltbonding.

2. Textile substrate according to claim 1, **characterised in that** the first component of the transverse threads has a melting temperature in the range of 70 to 150 °C.

3. Textile substrate according to claim 2, **characterised in that** the first component of the transverse threads is a polyamide homopolymer or polyamide copolymer or a blend of polyamide homopolymers and/or polyamide copolymers.

4. Textile substrate according to one or more of claims 1 to 3 **characterised in that** the second component of the transverse threads has a melting temperature above 200 °C.

5. Textile substrate according to claim 4, **characterised in that** the second component of the transverse threads is a glass or a polyester.

6. Textile substrate according to one or more of claims 1 to 5 **characterised in that** the transverse threads have a linear density in the range of 20 to 400 dtex.

7. Textile substrate according to one or more of claims 1 to 7 **characterised in that** the non-woven has mass per unit area in the range of 5 to 25 g/m².

8. Textile substrate according to one or more of claims 1 to 7, **characterised in that** the non-woven comprises a first polymer component whose melting temperature lies below the melting or decomposition temperature of the second component of the transverse threads and which is insoluble in epoxy, cyanate ester, or benzoxazine matrix resins or in blends of these matrix resins, and a second polymer component that has a lower melting temperature than the first polymer component.

9. Textile substrate according to claim 8, **characterised in that** the first polymer component of the non-woven has a melting temperature in the range of 180 to 250 °C and the second polymer component of the non-woven has a melting temperature in the range of 80 to 140 °C.

10. Textile substrate according to claim 8 or 9, **characterised in that** the first polymer component of the non-woven is a polyamide homopolymer or polyamide copolymer or a blend of polyamide homopolymers and/or polyamide copolymers.

11. Textile substrate according to one or more of claims 1 to 10, **characterised in that** on at least one of the surfaces of the flat layer of multifilament reinforcing yarns it further comprises a binder material whose main component is a thermoplastic polymer or a bisphenol A resin that is solid at room temperature and which is discontinuously applied to the flat layer of the multifilament reinforcing yarns and adhesively bonded to the multifilament reinforcing yarns.

12. Textile substrate according to claim 11, **characterised in that** the binder material has a melting temperature in the range of 80 to 120 °C.

13. Textile substrate according to one or more of claims 1 to 12 **characterised in that** the multifilament reinforcing yarns are carbon fibre, glass fibre or aramide yarns or highly stretched UHMW polyethylene yarns.

14. Textile substrate according to one or more of claims 1 to 13, **characterised in that** the at least one flat layer of multifilament reinforcing yarns arranged parallel side by side has a curved contour in which the multifilament reinforcing yarns are disposed parallel to a circumferential direction of the curved contour and each multifilament reinforcing yarn extends on its own trajectory along the circumferential direction of the curved contour and the trajectories of the individual multifilament reinforcing yarns have a common centre of curvature.

15. Fibre preform for the production of composite-material components **characterised in that** it comprises a textile substrate according to one or more of claims 1 to 14.

## Revendications

1. Substrat textile de fibres de renfort pour la fabrication d'ébauches de matériau composite, comprenant un mat unidirectionnel formé d'au moins une couche plane de fils de renfort multifilamentaires agencés parallèlement l'un à côté de l'autre,
- dans lequel les fils de renfort multifilamentaires agencés l'un à côté de l'autre sont liés l'un à l'autre via des filaments transversaux et
- dans lequel est agencé sur la au moins une couche plane des fils de renfort multifilamentaires un non-tissé formé d'un matériau polymère thermoplastique qui est lié par collage à la couche plane des fils de renfort multifilamentaires,
**caractérisé en ce que** :
- les filaments transversaux présentent une structure de noyau-enveloppe avec un premier composant constituant l'enveloppe et un second composant constituant le noyau, dans lequel le premier composant présente une température de fusion plus basse que le second composant, le premier composant est un matériau polymère thermoplastique fusible et les fils de renfort multifilamentaires agencés l'un à côté de l'autre sont liés l'un à l'autre par collage en fusion via le premier composant des filaments transversaux.

2. Substrat textile selon la revendication 1, **caractérisé en ce que** le premier composant des filaments transversaux présente une température de fusion dans la plage de 70 à 150 °C.

3. Substrat textile selon la revendication 2, **caractérisé en ce que** le premier composant des filaments transversaux est un homopolymère de polyamide ou un copolymère de polyamide ou un mélange d'homopolymères de polyamides et/ou de copolymères de polyamides.

4. Substrat textile selon une ou plusieurs des revendications 1 à 3, **caractérisé en ce que** le second composant des filaments transversaux présente une température de fusion supérieure à 200 °C.

5. Substrat textile selon la revendication 4, **caractérisé en ce que** le second composant des filaments transversaux est un verre ou un polyester.

6. Substrat textile selon une ou plusieurs des revendications 1 à 5, **caractérisé en ce que** les filaments transversaux présentent un titre dans la plage de 20 à 400 dtex.

7. Substrat textile selon une ou plusieurs des revendications 1 à 7, **caractérisé en ce que** le non-tissé présente un grammage dans la plage de 5 à 25 g/m².

8. Substrat textile selon une ou plusieurs des revendications 1 à 7, **caractérisé en ce que** le non-tissé comprend un premier composant polymère dont la température de fusion se situe en dessous de la température de fusion ou de décomposition du second composant des filaments transversaux et qui n'est pas soluble dans des résines matricielles d'époxyde, d'ester de cyanate ou de benzoxazine ou dans des mélanges de ces résines matricielles, ainsi qu'un second composant polymère qui présente une température de fusion plus faible que le premier composant polymère.

9. Substrat textile selon la revendication 8, **caractérisé en ce que** le premier composant polymère du non-tissé présente une température de fusion dans la plage de 180 à 250 °C et le second composant polymère du non-tissé présente une température de fusion dans la plage de 80 à 140 °C.

10. Substrat textile selon la revendication 8 ou 9, **caractérisé en ce que** le premier composant polymère du non-tissé est un homopolymère de polyamide ou un copolymère de polyamide ou un mélange d'homopolymères de polyamides et/ou de copolymères de polyamides.

11. Substrat textile selon une ou plusieurs des revendications 1 à 10, **caractérisé en ce qu'**il comprend en outre sur au moins l'une des surfaces de la couche plane des fils de renfort multifilamentaires un matériau liant dont le composant principal est un polymère thermoplastique ou une résine époxyde solide à température ambiante à base de bisphénol A et qui est appliqué de manière discontinue sur la couche plane des fils de renfort multifilamentaires et relié par collage aux fils de renfort multifilamentaires.

12. Substrat textile selon la revendication 11, **caractérisé en ce que** le matériau liant présente une température de fusion dans la plage de 80 à 120 °C.

13. Substrat textile selon une ou plusieurs des revendications 1 à 12, **caractérisé en ce que** les fils de renfort multifilamentaires sont des fils de fibres de carbone, de fibres de verre ou d'aramide ou des fils de polyéthylène UHMW fortement étirés.

14. Substrat textile selon une ou plusieurs des revendications 1 à 13, **caractérisé en ce que** la au moins une couche plane constituée de fils de renfort multifilamentaires agencés parallèlement l'un à côté de l'autre présente un contour courbe dans lequel les fils de renfort multifilamentaires sont agencés parallèlement à une direction périphérique du contour courbe et chaque fil de renfort multifilamentaire s'étend sur sa propre courbe de trajectoire affectée à la direction périphérique du contour courbé et les courbes de trajectoire des fils de renfort multifilamentaires présentent un centre de courbure commun.

15. Ebauche de fibres pour la fabrication de pièces de matériau composite, **caractérisée en ce qu'**elle comprend un substrat textile selon une ou plus des revendications 1 à 14.
